(19) **Europäisches Patentamt / European Patent Office / Office européen des brevets**

(11) **EP 2 336 789 A1**

(12) # EUROPEAN PATENT APPLICATION

(43) Date of publication:
**22.06.2011 Bulletin 2011/25**

(51) Int Cl.:
***G01Q 20/02*** (2010.01)    ***G01B 9/02*** (2006.01)

(21) Application number: **09180213.2**

(22) Date of filing: **21.12.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicant: **CSEM Centre Suisse d'Electronique et de Microtechnique SA - Recherche et Développement 2002 Neuchâtel (CH)**

(72) Inventors:
• **Meister, André**
  **2314 La Sagne (CH)**
• **Gruener, Gabriel**
  **8055 Zürich (CH)**
• **Polesel-Maris, Jérôme**
  **91190 Gif-sur-Yvette (FR)**

(74) Representative: **GLN**
    **Rue du Puits-Godet 8a**
    **2000 Neuchâtel (CH)**

(54) **Parallel cantilever deflection measurement**

(57)    The present invention discloses a micromechanical measurement system comprising:
- a laser source (1), for emitting a coherent light beam (2),
- an interferometer,
- a camera (10), for acquiring a picture of the interferogram composed of a plurality of fringes,
- image processing means.

The image processing means are arranged in order to compute the absolute deflection $\Delta z_x$ of the movable area at a position x along the length of the flexible micromechanical structure by performing one initialization in a first interferogram picture taken at a fixed time to and at least one measurement in a second interferogram picture taken at a variable time t.

Figure 1

## Description

Field of the invention

The present invention relates to the field of microsystem displacement detection, and more precisely to a device and methods for measuring the deflection over a large range with high accuracy of a flexible micromechanical structure such as single microcantilever and array of microcantilevers for Scanning Probe Microscopy (SPM) aims.

Background of the invention

In the field of micromechanics, flexible micromechanical structures (FMS) are widely used. For example, they can be used in the field of Atomic Force Microscopy (AFM), or Scanning Force Microscopy (SFM). They are generally implemented to scan the topography of the surface of a sample at a nanoscale.

FMS can take various shapes and structures. Among them, cantilevers are well-known. A cantilever can be obtained from an elongated elastic beam, having a clamped end and a free end. For AFM, it is generally fitted with a sharp tip at its free end. When the tip is brought into proximity of a sample surface, interaction forces between the tip and the sample lead to a deflection of the cantilever. When scanning the tip on the sample following a regular bidimensional mesh of points, the topography of the sample surface can be determined by measuring the deflection of the cantilever at each mesh point. By scanning the probe perpendicularly to the sample surface (known as force spectroscopy mode), interaction forces, such as intermolecular forces, between the tip and the sample surface can be analyzed.

Next to single-clamped cantilevers are double-clamped levers. They are other well-known FMS used in the field of SFM. Both ends of this structure are clamped whereas a movable area is arranged in between. More generally multi-clamped FMS can also be considered.

FMS can also be used for chemical noses. For that use, a cantilever without tip is coated with a material that captures particular molecules.

The cantilever will deflect or will change its resonance frequency depending on the number and the weight of the captured molecules and measuring the deflection or the shift in resonance frequency of the FMS indicates the proportion of the captured molecule.

Among the different optical techniques that may be used to measure the deflection of the FMS, projecting a laser beam onto the reflective surface of the FMS is widely used (G. Meyer et al., Appl. Phys. Lett. 53 (1988) 1045). A multiquadrant (generally two or four) photodiode detects the spatial position of the laser beam reflected by the top surface, and the deflection of the cantilever can easily be determined from this position. This measurement of the cantilever deflection makes use of the angular variation of the reflective surface induced by the cantilever deflection. The sensitivity of the measurement is thus dependent on the FMS geometry. E.g., for an identical deflection, the longer the AFM cantilever, the smaller the sensitivity.

The use of cantilever array instead of a single lever speeds up scanning of the surface, or molecular force spectroscopy. With such a setup, simultaneous measurement of the deflection of each cantilever by projecting a laser onto the cantilevers is very impractical. Indeed, if the deflection of the cantilevers is large, the reflected beams may intersect and it could be impossible to link a reflected beam to the cantilever having reflected it, leading to erroneous measurements due to crosstalks. This technique could only be used if the maximum deflection of the cantilever is reduced (M. Yue et al., J. Microelectromech. Syst. 13 (2004) 290).

Another optical method for measuring the deflection of the cantilever is based on interferometry. For example, the document JP 3,123,805 discloses an interatomic force microscope, wherein an interferometer is used to measure the displacement of a single cantilever, the principle being easily adaptable to a 2D array of cantilevers. A light beam is divided into a reference beam and a test beam, the reference beam being projected onto a mirror and the test beam being projected onto the cantilever top surface. The reflected beams are combined, producing interference fringes that are moving when the cantilever moves from a rest position to a working position. A fringe counter is arranged in order to count the number of fringes passing in front of it, and the result is used to compute the deflection of the cantilever. This measurement technique is dynamic and cumulative. For a sudden singular displacement of the free end of the cantilever, there is a risk that the fringe counter may miss some fringes, leading to an erroneous measure. This situation is particularly likely to occur in an AFM, e.g. in AFM force spectroscopy mode, when the tip is withdrawn, attractive forces (such as adhesion, capillary, or molecular grafting) may retain the tip of the cantilever until the cantilever returns violently back to its rest deflection.

Another method using an interferometry technique is disclosed in the article "Multi-Probe SPM using Fringe Patterns for a parallel Nano Imaging" from H. Koyama et al. (IEEE/LEOS International Conference on Optical MEMs and Their Applications (2006) 172). A plurality of cantilevers is disposed in a 2-dimensional array under a Pyrex blade. A laser beam is projected onto the Pyrex blade, this light beam being partly reflected by the Pyrex blade surface and partly transmitted and then reflected back by the surface of the cantilever placed under the Pyrex blade. When the cantilever surface is not parallel to the Pyrex blade surface, the combination of the light reflected by the Pyrex and the light reflected by the cantilever produces interferometric fringes that are acquired by means of a CCD (Charge-Coupled Device). The fringes lie perpendicularly to the cantilever length. The number of fringes for each cantilever depends on the deflection of the cantilever. Associated processing means such as phase unwrapping procedures analyze the pattern in order to compute the deflection of each cantilever, which requires to analyze the interferogram of the entire path going from a fixed reference point on the frame to the point of interest on the flexible structure. This method has the advantage to be static, i.e. the computed deflection does not rely on cumulative measurements. However, as the fringes are identically produced whatever the deflection (positive or negative), it is, consequently, not possible to figure out from the interferogram, whether the deflection is positive or negative. The situation where the deflection of the cantilever is negative is also likely to occur when the cantilever is moved away from the surface to scan, having its tip retained by attractive forces. Furthermore, in the described set-up, there is no means to adjust the angle between the measuring beam and the reference beam, i.e. the spatial distribution of the interfringes.

The present invention proposes systems and their associated methods for measuring the deflection of a cantilever, or a 1-dimensional array of cantilever, or a 2D-array of cantilever in which these drawbacks are avoided.

Summary of the invention

The present invention discloses a micromechanical measurement system comprising:

- a laser source, for emitting a coherent light beam having a wavelength $\lambda$,
- an interferometer, comprising:
- a beam splitter, receiving the light beam, and separating it into a reference beam and a sample beam,
- a mirror, oriented about perpendicularly to the reference beam, and reflecting it in the direction of the beam splitter,
- at least one flexible micromechanical structure, having a reflective surface, at least a clamped area and a movable area, said reflective surface reflecting the sample beam in the direction of the beam splitter,
- a camera, for acquiring a picture of an interferogram produced by a recombination, at the beam splitter level, of the reflected reference and sample beams, the interferogram picture being composed of a plurality of fringes,
- at least one imaging lens, allowing the flexible micromechanical structure to be imaged on the camera, and
- image processing means.

According to the invention, the fringes are about parallel to the length of the flexible micromechanical structure when no force is applied to the movable area and the image processing means are arranged in order to compute the absolute deflection $\Delta z_{x1}$ of the movable area at a position x1 along the length of the flexible micromechanical structure by performing:

- one initialization in a first interferogram picture taken at a fixed time to and
- at least one measurement in a second interferogram picture taken at a variable time t.

The image processing means can furthermore be arranged to analyze the torsion of the flexible micromechanical structure at a position x of the movable area.

The present invention further discloses methods for computing an absolute deflection $\Delta z_{x1}$ of a flexible micromechanical structure for a micromechanical measurement system, at a position x1 of the movable area. The image processing means can be arranged to perform at least one initialization and one measurement in the respective interferogram pictures.

The present invention also discloses a method for computing the torsion of a flexible micromechanical structure for a micromechanical measurement system, at a position x of the movable area. The image processing means can be arranged to perform one initialization and one measurement in the respective interferogram pictures.

Brief description of the drawings

The above and other objects, features and advantages of the present invention will become further apparent from the following description of the preferred embodiment taken in conjunction with the accompanying drawings, in which:

- figure 1 depicts the setup for a micromechanical measurement system implementing a cantilever,
- figure 2 presents the setup from figure 1 further including a prism,
- figures 3a, 3b and 3c present three interferogram pictures produced during the measurement process, associated with three different cantilever deflections,
- figures 4a, 4b, 4c present a quadratic area from three interferogram pictures corresponding to three different cantilever deflections,

- figures 4d, 4e, 4f show the result of a Fast Fourier Transform applied to the quadratic area of figures 4a to 4c respectively,
- figures 5a, 5b and 5c present three interferogram pictures produced during the measurement process, associated with three different cantilever deflections,
- figures 5d, 5e and 5f present the lateral phases of a set of fringes from the interferogram picture given in figures 5a, 5b, 5c respectively,

Detailed description

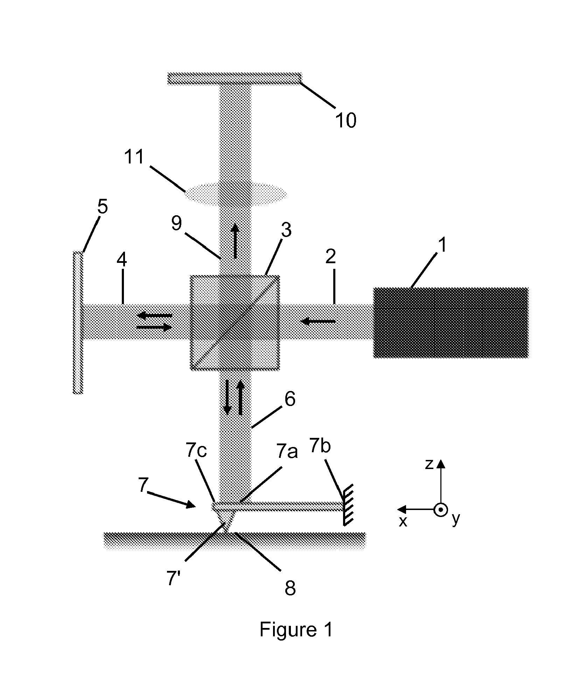

Figure 1 depicts a micromechanical measurement system based on a Michelson interferometer. The same measurements could be performed using other known interferometers, such as for example, a Linnik or a Mirau interferometer.

According to a first preferred embodiment of the present invention, the system comprises:

- a laser source 1, emitting a coherent light beam 2, the light beam being expanded using beam expander optics not represented in Figure 1,
- an interferometer comprising:
- a beam splitter 3, receiving the light beam 2 and separating it into a reference beam 4 and a sample beam 6,
- a mirror 5, oriented about perpendicularly to the reference beam 4 and reflecting it in the direction of the beam splitter 3,
- a flexible micromechanical structure implemented as a cantilever 7, having a reflective surface 7a , at least a clamped end 7b and a movable free end 7c, the reflective surface 7a reflecting the sample beam 6 in the direction of the beam splitter 3,
- a camera 10, for acquiring a picture of an interferogram produced by a recombination, at the beam splitter 3 level, of the reflected reference beam 4 and sample beam 6, the interferogram picture being composed of a plurality of fringes,
- at least one imaging lens 11, allowing the cantilever 7 to be imaged on the camera, and
- image processing means.

The reflective surface 7a of the cantilever 7 is oriented about perpendicularly to the sample beam 6 when no force is applied to the movable area 7c.

For clarity reasons of the figure, the cantilever was enlarged. In reality, the entire reflective surface 7a of the cantilever is exposed to the sample beam 6. When the FMS is a 2-dimensional array of individual structures, then the entire array is exposed to the sample beam.

For AFM applications, at the free end of the cantilever is attached a sharp tip 7', probing the surface 8 of the object to scan, the free end 7c being movable along a z-axis. The cantilever 7 including the sharp tip 7' can be microfabricated using any known techniques.

The image processing means are used to perform the computations described hereafter. These computations can be performed using any known data processing means, such as a microprocessor core, a microcontroller, an application specific integrated circuit (ASIC), a programmable device (such as a FPGA) or a combination of any of these means.

The reference beam 4 reflected by the mirror 5 and the sample beam 6 reflected by the reflective surface 7a of the cantilever 7 are recombined at the beam splitter 3 level, producing an interferogram comprising a plurality of fringes. The camera 10 is arranged in order to acquire a picture of the interferogram, the imaging lens 11 being placed between the beam splitter 3 and the camera 10 to focus the image of the interferogram on the camera sensor. The lens 11, which is movable, allows adjusting the focal plane on the cantilever or on the sample surface. Other lenses, or group of lenses such as objectives, may be placed in the beams 2, 4, 6 or near the lens 11 to enhance the quality of the interferogram.

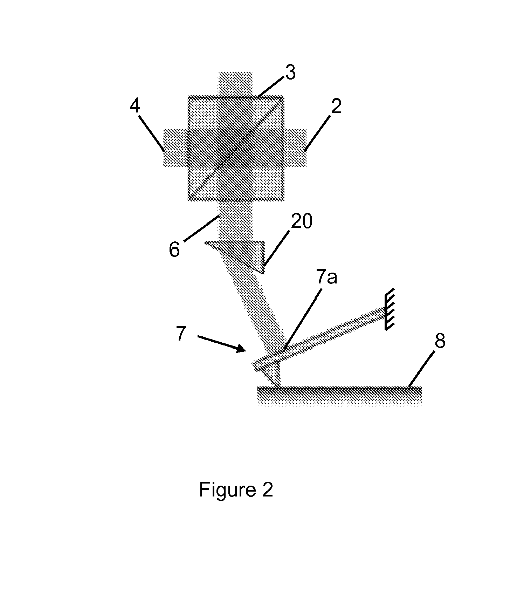

Figure 2 presents a close-up view of a setup similar to the setup shown in figure 1. It furthermore comprises a prism 20 placed between the beam splitter 3 and the cantilever 7. It is arranged to deviate the sample beam 6 and orient it perpendicularly to the reflective surface 7a of the cantilever 7.

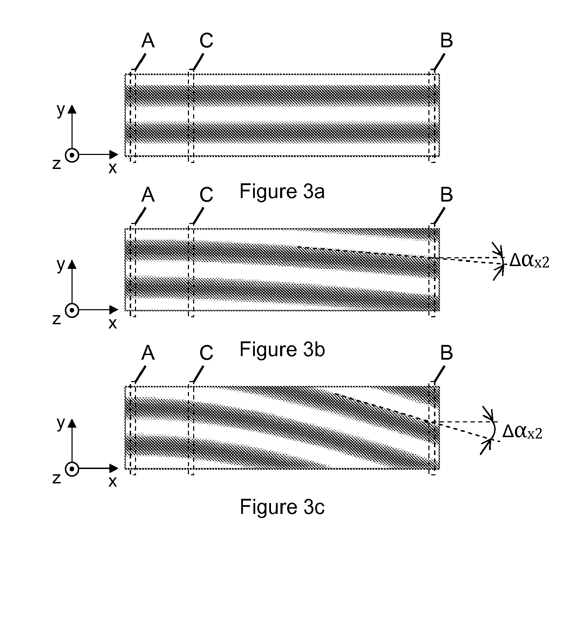

Figures 3a to 3c show a picture of the interferogram corresponding to a cantilever having three different deflections when a force is applied to the tip 7' along the z direction. The cantilever is clamped towards the A area, and the force is applied towards the B area.

In Figure 3a, the cantilever is in its rest position (i.e. no force is applied). In Figure 3b, the cantilever has a small deflection. In figure 3c, the cantilever has a large deflection.

By adequately adjusting the tilt of the mirror 5 and/or of the cantilever 7, the fringes of the interferogram are oriented to be about parallel to the cantilever's length as shown in Figure 3a.

The fringes have a lateral period (measured perpendicularly to the cantilever's length, i.e. in y-direction)) of

$\dfrac{\lambda}{\sin\theta}$, where θ is the angle between the projections onto the yz-plane of the recombined reference beam 4 and the recombined sample beam 6. When the cantilever 7 is not subject to torsions but only to a deflection, the lateral distance between two consecutive fringes remains constant, regardless the amplitude of the deflection and the location of the measurement.

A motion at the free end of the cantilever, such as a deflection or a torsion, provokes a change in the spatial position and orientation of the fringes in the interferogram. It is possible to determine from the spatial position of the fringes the absolute deflection, as well as the torsion, of the cantilever 7, and hence the position of the tip 7'.

From Figure 3b and 3c, it can be seen that at a given position along the cantilever, the cantilever deflection provokes a lateral shift of the fringes, (perpendicularly to the cantilever's length, i.e. in y-direction). The closer to the cantilever free end, the more the shift is pronounced, resulting in a change in the fringes orientation.

The change of the fringes orientation defines an angle shift $\Delta\alpha_{x2}$ as shown in Figure 3b and Figure 3c defined with the orientation of the fringes when the cantilever is in its rest position. The angle shift $\Delta\alpha_{x2}$ is greater near the free end (in the B area), where the deflection is large, than it is near the clamped end (in the A or C area) where the deflection is small. Performing an angle measurement at the free end, where the deflection is the largest, yields therefore the best sensitivity to compute the absolute deflection $\Delta z$ of the flexible micromechanical structure. Advantageously, the measurement shall be performed in the B area.

An angle shift measurement is also suitable to measure a positive or a negative deflection, since the direction of the fringes orientation depends on the direction of the deflection.

In this first preferred embodiment of the present invention, the image processing means are arranged to compute the absolute deflection $\Delta z_{x1}$ of the movable area at a position x1 along the length of the flexible micromechanical structure by first performing one initialization in a first interferogram picture taken at a fixed time $t_0$.

This initialization must be initially performed in order to determine the angle $\alpha_{x2}(t_0)$ formed by a set of fringes with the length of the flexible micromechanical structure at a position x2 along said length.

Secondly, a measurement can be carried out to determine the angle $\alpha_{x2}(t)$ formed by a set of fringes with the length of the flexible micromechanical structure at said position x2 in the interferogram picture taken at a chosen time t.

Consequently, the angle shift $\Delta\alpha_{x2}$ can be computed from the following relation :

$$\Delta\alpha_{x2}(t) = \alpha_{x2}(t) - \alpha_{x2}(t_0)$$

The absolute deflection $\Delta z_{x1}$ at the given position x1 is subsequently given by a transfer function $f_{x2}$:

$$\Delta z_{x1} = f_{x2}(\Delta\alpha_{x2})$$

The transfer function $f_{x2}$ characterizes the absolute deflection $\Delta z_{x1}$ at the position x1 according to the angle shift $\Delta\alpha_{x2}$ measured at the position x2. The position x2 and x1 could be the same. In AFM, the transfer function can e.g. be calibrated experimentally by inducing known cantilever deflections using the calibrated z-scanner of the AFM.

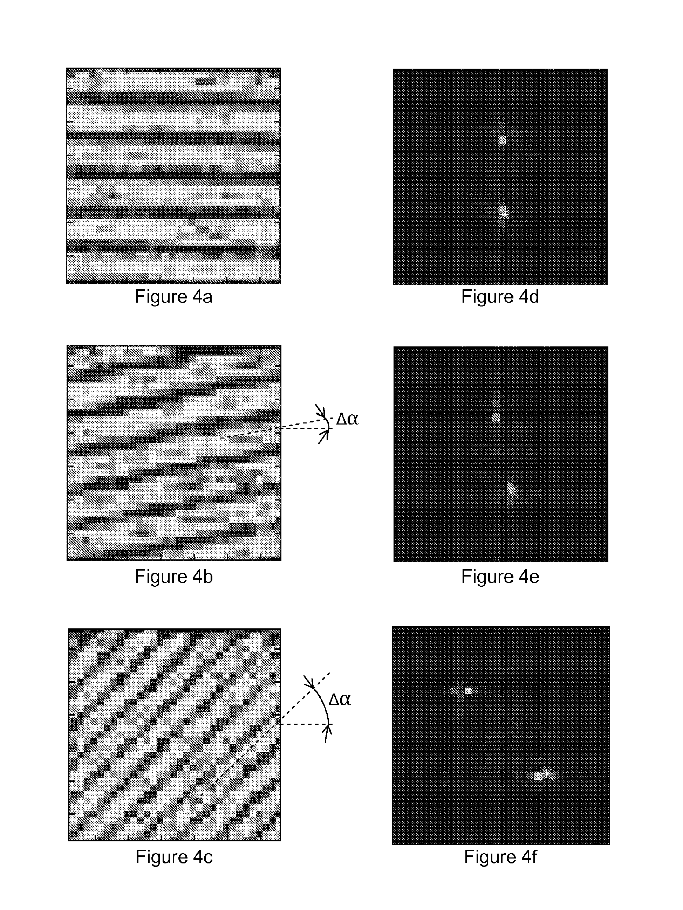

Any known technique can be used in order to compute $\Delta\alpha_{x2}$. One such technique relies on a Fast Fourier Transform (FFT) applied to a quadratic area located at the position x2 of the interferogram. Figures 4a to 4c show a quadratic area of the interferogram picture taken at the free end of the cantilever. Figure 4a shows a quadratic area when the cantilever is in its rest position, hence the fringes lie about parallel to the cantilever length. In figure 4b, the fringes define an angle shift $\Delta\alpha_{x2}$ due to a small absolute deflection $\Delta z_{x1}$. In figure 4c, the fringes define a larger angle shift $\Delta\alpha_{x2}$ due to a large absolute deflection $\Delta z_{x1}$. The resulting FFT magnitudes, computed using known techniques, are represented in figures 4d to 4f. The location of the magnitude peak is marked with a white star and corresponds to the main spatial frequency of the interferogram image. The location of the magnitude peak may be interpolated using known methods to improve the accuracy. The horizontal displacement of the peak (i.e. change in the angle shift $\Delta\alpha_{x2}$) corresponds to the cantilever's deflection. Therefore this method uses only one initialization (e.g. to precisely define the rest position) made in a first interferogram picture and one measurement in a second interferogram picture to compute the cantilever absolute deflection $\Delta z_{x1}$ at the position x1.

In a second embodiment of the present invention, the system of the invention comprises image processing means which are arranged to compute the absolute deflection $\Delta z_{x1}$ of the cantilever at a position x1 of the movable area by also performing an initialization in a first interferogram picture and a measurement in a subsequent interferogram picture. It relies on the computation of a lateral phase shift formed by a set of fringes chosen in the movable area.

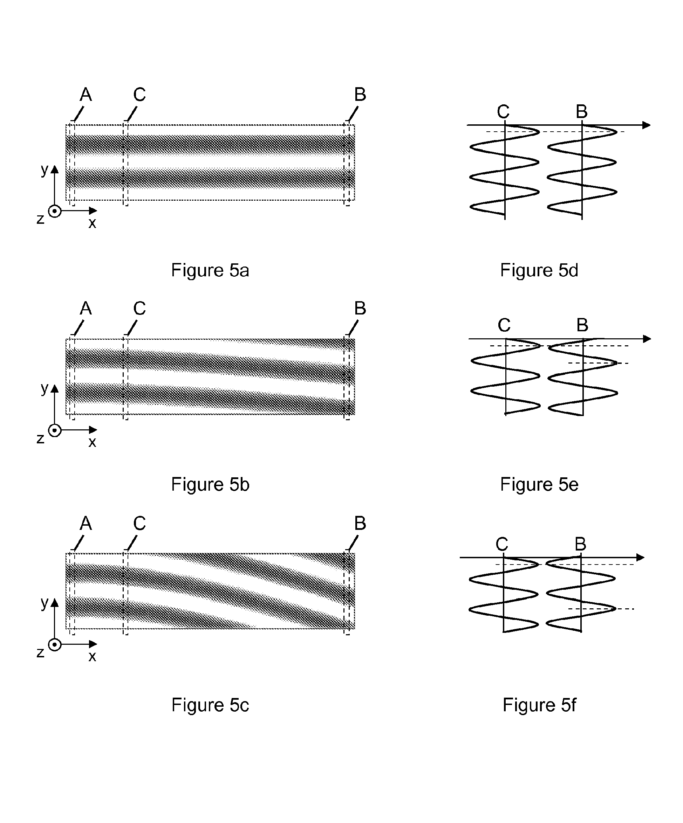

Figures 5a to 5c, similarly to figures 3a to 3c, show successive pictures of the interferogram corresponding to a cantilever having three distinct deflections.

In the same fashion as with the angle shift $\Delta\alpha_{x2}$, a lateral phase shift $\Delta\varphi_x$ is greater near the free end, (in the B area) where the deflection is large, than it is near the clamped end (in the A or C area) where the deflection is small. Performing a lateral phase shift measurement at the free end, where the deflection is the largest, yields therefore the best sensitivity and accuracy. Advantageously, the measurement shall be performed in the B area.

A lateral phase shift measurement is also suitable to measure a positive or a negative deflection, since the direction of the fringes phase shift depends on the direction of the deflection.

However, when the deflection at a given position x becomes too large, that is, larger than half the wavelength of the laser source, then the phase shift is greater than $2\pi$, the phase shift measurement is performed modulo $2\pi$ leading to a phase ambiguity. Figure 5c provides an example of such a case in the B area where the phase shift is greater than $2\pi$. Consequently, the computation of the deflection based on the phase shift is ambiguous. The phase shift $\Delta\varphi_{amb}$ is given modulo $2\pi$, the ambiguous deflection is given modulo $n \cdot \lambda / 2$, n being an integer and $\lambda$ being the wavelength of the laser source.

An object of the invention, in order to compute eventually an absolute deflection $\Delta z_{x1}$ at a position x1 where the lateral phase shift $\Delta\varphi_{x1}$ could be larger than $2\pi$ and therefore ambiguous, is to arrange the image processing means to perform one initialization in a first interferogram picture taken at a time to, and one measurement in a second interferogram picture taken at a variable time t at a position chosen to yield non-ambiguous, in other words, absolute, deflection values.

One aspect of the invention is to choose a position C near the clamped area. It ensures that the maximum absolute deflection at position C shall always remain smaller than half the wavelength $\lambda$ of the laser beam 1. The initialization measurement determines a lateral spatial phase $\varphi_C(t_0)$ of a set of fringes at the given position C. The subsequent measurement determines, at the chosen time t, the lateral spatial phase $\varphi_c(t)$ of a set of fringes at the same position C. The lateral phase shift $\Delta\varphi_C(t)$ is given by:

$$\Delta\varphi_C(t) = \varphi_C(t) - \varphi_C(t_0)$$

The absolute deflection $\Delta z_{x1}$ at the given position x1 is subsequently given by a transfer function $g_c$:

$$\Delta z_{x1} = g_c(\Delta\varphi_C)$$

The transfer function $g_c$ characterizes the deflection of the movable area at the position x1 according to the lateral spatial phase shift measured at the position C. In AFM, the transfer function can be calibrated experimentally by inducing known cantilever deflections using the calibrated z-scanner of the AFM.

In the case where x1 and C corresponds to the same location, then the absolute deflection $\Delta z_{x1}$ is also given by:

$$\Delta z_{x1} = \frac{\lambda}{2}\frac{\Delta\varphi_C}{2\pi}$$

This previous embodiment is advantageous for its simplicity. In another embodiment, the complexity is increased to achieve higher accuracy. In order to compute eventually an absolute deflection $\Delta z_{x1}$ with higher accuracy, the image processing means relies on an ambiguous deflection $\Delta h_{x1,amb}$ modulo $n \cdot \frac{\lambda}{2}$. The position x1 is chosen near the free end B where the sensitivity is highest, as shown in figure 5a.

In this embodiment, the initialization comprises one measurement to determine the lateral spatial phase $\varphi_{x1}$

($t_0$) of a set of fringes at said position x1 chosen within the B area.

Then another measurement is performed in a second interferogram picture, at a variable time t, in order to determine the lateral spatial phase $\varphi_{x1}(t)$ of the same set of fringes.

The outcome is an ambiguous lateral spatial phase shift $\Delta\varphi_{x1,amb}$ modulo $2\pi$ given by :

$$\Delta\varphi_{x1,amb}(t) = \varphi_{x1}(t) - \varphi_{x1}(t_0)$$

The ambiguous deflection $\Delta h_{x1,amb}$ modulo $\lambda/2$ is given by :

$$\Delta h_{x1,amb} = \frac{\lambda}{2}\frac{\Delta\varphi_{x1,amb}}{2\pi} \text{ modulo } \lambda/2$$

where $\lambda$ is the wavelength of the laser source 1.

In a more general case, e.g. when the laser's wavelength $\lambda$ is unknown, a preferred relation is used to compute $\Delta h_{x1,amb}$ using a transfer function $g_{x1}$:

$$\Delta h_{x1,amb} = g_{x1}(\Delta\varphi_{x1,amb}) \text{ modulo } g_{x1}(2\pi)$$

In AFM, the transfer function $g_{x1}$ can e.g. be calibrated experimentally by inducing known cantilever deflections using the calibrated z-scanner of the AFM.

In some applications, such as AFM, it can be more convenient, for practical reasons, to carry out the measurements at a position x2 different from x1 (i.e. at the tip position). The lateral phase shift $\Delta\varphi_{x2,amb}$ is therefore measured instead of $\Delta\varphi_{x1,amb}$. The position translation can be taken into account during the calibration of a transfer function $g_{x2}$. This transfer function characterizes the deflection of the movable area at the position x1 according to the lateral spatial phase shift measured at the position x2. The ambiguous deflection $\Delta h_{x1,amb}$ is computed according to the following relation:

$$\Delta h_{x1,amb} = g_{x2}(\Delta\varphi_{x2,amb}) \text{ modulo } g_{x2}(2\pi)$$

In order to solve the phase ambiguity of $\Delta h_{x1,amb}$ modulo $g_{x2}(2\pi)$, respectively $\Delta\varphi_{x2,amb}$ modulo $2\pi$, and to compute the absolute deflection $\Delta z_{x1}$, the image processing means are further arranged to make coarse measurements. Although such measurements exhibit lower accuracy, they are arranged to be non ambiguous. Therefore, the initialization further comprises a first coarse measurement made at a position x3. A second coarse measurement is subsequently made in the second interferogram picture taken at the variable time t at the same position x3. Both coarse measurements are used to compute a coarse absolute deflection $\Delta z_{x1,coarse}$ at the position x1. The absolute deflection $\Delta z_{x1}$ is finally obtained from the following relation :

$$\Delta z_{x1} = \Delta h_{x1,amb} + \text{integer}\left(\frac{\Delta z_{x1,coarse} - \Delta h_{x1,amb}}{g_{x2}(2\pi)} + \frac{1}{2}\right) \cdot g_{x2}(2\pi) \quad (1)$$

In one embodiment to make coarse measurements, the position x3 is chosen to be near the clamped area. It ensures that the maximum absolute deflection at this position shall always remain smaller than half the wavelength $\lambda$ of the laser beam 1. Hence no phase ambiguity may affect this measurement. The first coarse measurement, in the first interferogram picture, determines a lateral spatial phase $\varphi_{x3}(t_0)$ during the initialization at to. Similarly, in the second interferogram picture taken at a subsequent time, the second coarse measurement determines the lateral spatial phase $\varphi_{x3}(t)$ of the set of fringes. The lateral spatial phase shift $\Delta\varphi_{x3}(t)$ is given by:

$$\Delta\varphi_{x3}(t) = \varphi_{x3}(t) - \varphi_{x3}(t_0)$$

The absolute deflection $\Delta z_{x1,coarse}$ at said position x1 is given by the equation, previously presented:

$$\Delta z_{x1,coarse} = g_{x2}(\Delta\varphi_{x2}(t))$$

In this embodiment, $\Delta\varphi_{x2}(t)$ is computed from the following relation:

$$\Delta\varphi_{x2}(t) = K.\ \Delta\varphi_{x3}(t)$$

where K is a proportionality constant according to the relation,

$$K = \frac{\Delta\varphi_{x2\_ref}}{\Delta\varphi_{x3\_ref}}$$

$\Delta\varphi_{x2\_ref}$ is a phase shift reference smaller than $2\pi$ at said position x2,
$\Delta\varphi_{x3\_ref}$ is a phase shift reference smaller than $2\pi$ at said position x3 and
$\Delta\varphi_{x2\_ref}$ and $\Delta\varphi_{x3\_ref}$ correspond to a deflection $\Delta z_{x1\_ref}$.

Therefore, given $\Delta h_{x1,amb}$ and $\Delta z_{x1,coarse}$, the accurate and absolute deflection $\Delta z_{x1}$ can be computed according to relation (1).
In another embodiment involving coarse measurements, the position x3 is not necessarily chosen to be near the clamped area. The first coarse measurement is arranged to yield an angle $\alpha_{x3}(t_0)$ formed by a set of fringes with the length of the flexible micromechanical structure. The second coarse measurement similarly determines an angle $\alpha_{x3}(t)$. The absolute deflection $\Delta z_{x1,coarse}$ is then given by a transfer function $f_{x3}$. This transfer function $f_{x3}$ characterizes the deflection of the movable area at the position x1 according to the angle shift measured at the position x3. In AFM, the transfer function can be calibrated experimentally by inducing known cantilever deflections using the calibrated z-scanner of the AFM. The coarse deflection $\Delta z_{x1,coarse}$ is given by:

$$\Delta z_{x1,coarse} = f_{x3}(\Delta\alpha_{x3}),$$

where:

$\Delta\alpha_{x3}$ is the angle shift at said position x3 given by :

$$\Delta\alpha_{x3}(t) = \alpha_{x3}(t) - \alpha_{x3}(t_0)$$

In the AFM lateral friction mode, the cantilever is scanning the surface in the y-direction. The friction between tip 7' and sample surface exposes the tip 7' to lateral forces in addition to the normal force. In that case, the cantilever will be subjected to torsion. Torsion changes the angle θ defined as the angle in the y-z plane between the reference beam 4 and sample beam 6 after recombination. The variation of the angle θ is proportional to the variation of the cantilever torsion. A change in the angle θ will result in a change in the lateral periodicity of the sinusoidal intensity pattern (perpendicularly to the cantilever's length) of the fringes in the interferogram. By measuring the period of the fringes, the variation of θ induced by the cantilever torsion can be computed from the following relation:

$$y - y_0 = \lambda . \left( \frac{1}{\sin \theta} - \frac{1}{\sin \theta_0} \right)$$

y is the lateral period of the fringes in the movable area 7c when a force is applied.
y0 is the lateral period of the fringes in the movable area 7c when no force is applied.
θ is the angle between the projections of the reference and sample beams onto a plane normal to the length of the flexible micromechanical structure (i.e. y-z plane) after recombination in the beam splitter 3 when a force is applied.
$\theta_0$ is the angle between the projections of the reference and sample beams onto a plane normal to the length of the flexible micromechanical structure (i.e. y-z plane) after recombination in the beam splitter 3 when no force is applied.
λ is the wavelength of the laser source 1.

Some noises induced by the mechanical or optical components of the setup may contaminate the measurement of the cantilever deflection. It is possible to immunize the measurement process against these disturbances by using a referencing measurement at a location that does not move when the cantilever moves. Some mechanical or optical noise may induce that the referencing measurement has an apparent motion $\Delta z_{reference}$ when analysing the acquired picture (by means of the above described methods such as phase shift, FFT). The corrected deflection of the cantilever is then computed from the following relation:

$$\Delta z_{corrected} = \Delta z_{measured} - \Delta z_{reference}$$

where $\Delta z_{measured}$ is the deflection measured of the cantilever, this measurement being performed on the same acquired picture than for the measurement of $\Delta z_{reference}$. This differential measurement prevents the system of mechanical or optical disturbances.

An example of referencing measurement is given in figure 3a, 3b and 3c, where a referencing measurement is placed at the clamped end A of the cantilever.

In order to adjust the spatial orientation and spacing of the interferometric fringes, the mirror and/or the lever is adjustable in tilt.

The setup and method described above can advantageously be used with a 1D or 2D array of cantilevers, the reflective top surfaces 7a of all the cantilevers of the array being on the same horizontal plan when no forces are applied at their free ends, and the second separated beam 6 being projected on the reflective top surface of all the cantilevers of the array.

When an array of cantilevers is used, the camera 10 is advantageously used to acquire a single picture of the interferogram pattern of the whole cantilever array. The image processing means can easily extract the regions of interest, depending of the measurement methods exposed previously, for each cantilever on the same acquired picture and compute the deflection and / or the torsion of each cantilever of the array. By parallelizing the deflection and / or torsion measurement, this configuration reduces greatly the time to scan an entire surface of an object.

In order to reduce the noise when using an array of cantilevers, there can be either one referencing measurement per cantilever, one referencing measurement per group of cantilevers or one referencing measurement for the whole array of cantilevers.

Based on the setup and method described above, some improvements are disclosed in the following paragraphs.

The first improvement consists in adding a first objective between the beam splitter 3 and the cantilever 7. This first objective enhances the numerical aperture of the imaging system. Thereof, it improves the resolution of the interferogram pattern acquired by the camera 10, and consequently improves the precision of the measured deflection. However, to produce an interferogram pattern with straight and parallel fringes, it is important for the optical wavefront between the cantilever 7 and the beam splitter 3 and for the optical wavefront between the mirror 5 and the beam splitter 3 to be as identical as possible. A second objective, identical to the first objective, shall be added between the beam splitter 3 and the mirror 5. However, as an objective is generally costly, the second objective can advantageously be replaced by a compensation lens, this lens having an axial translation degree of freedom to set accurately the wavefront identical to the wavefront of the optical arm with the objective.

A second improvement consists in cancelling some parasite reflections and undesired diffraction effects. The laser source 1 is polarized linearly. A first $\lambda/4$ plate is placed between the beam splitter 3 and the cantilever 7, a second $\lambda/4$ plate is placed between the beam splitter 3 and the mirror 5, and a linear polarizer is placed between the beam splitter 3 and the camera 10 with a normal polarization to the laser source polarization. In this configuration, any parasitical reflections in the imaging system occurring between the $\lambda/4$ plates and the polarizers cannot illuminate the camera sensor.

A third improvement consists in adding a white noise on the laser diode, in order to remove some artifacts between the fringes. This is performed by superposing a white noise signal to the DC power supply of the laser source 1. This white noise decreases the coherence length of the light beam 2 produced by the laser source 1 and thus reduces the disturbances on the interferogram image due to parasitical optical diffractions. The optical lengths of the measuring and sample beams have to be adjusted to have an identical length, with an accuracy better than the coherence length of the light beam.

Another embodiment of the present invention consists in giving the ability to avoid the combination of the reflected reference beam with the reflected sample beam. This can be reached for example by a shutter arranged to blank out for a determined period of time the reference beam between the beam splitter 3 and the mirror 5. In that case, the setup is easily transformed into a classical microscope, where the camera 10 acquires directly a picture of the cantilever or of the sample under the cantilever. By adding a white light source or replacing the laser source by a white source, it allows the user to investigate the sample by use of white light microscopy, and when cantilever deflection and / or torsion measurement is necessary, to easily switch to a monochromatic or multichromatic laser source.

In another embodiment, in relation with the Figure 2, the cantilever may not be oriented perpendicular to the sample beam. Depending on how the probe (chip, cantilever and tip) is designed, it is possible for the cantilever to be tilted too much so that the reflected sample beam is no longer collected by the optical setup. By inserting, a prism 20 in the sample beam 6 between the beam splitter 3 and the cantilever 7, the prism will deviate the sample beam. The prism 20 is arranged in order that the sample beam, after being deviated, is oriented perpendicular to the cantilever. After reflection, by the cantilever, the prism 20 will deviate again the reflected sample beam and will re-orientate it in a direction opposed to the initial sample beam 6, in order to be recombined with the reflected reference beam at the beam splitter 3 level and produce the interferogram pattern.

The camera 10 used to acquire the picture can be based on a CMOS or a CCD sensor. The main advantages of CCD versus CMOS is the higher signal-to-noise ratio (CCD have less transistors on the chip, so they are less noisy). In the same time the advantage of CMOS versus CCD is the possibility to address area of interest of different sizes and various shapes until one pixel (for CCD technology the minimum area of interest is one line). The camera can be equipped with a grey-level sensor or when several wavelengths are used with a color sensor.

The setup, method and improvements described above are suitable to analyze the motion or the deflection of a cantilever or a cantilever array in AFM contact mode (where the tip of the cantilever is in contact with the surface to scan) working in a low frequency bandwidth of several hundreds of Hertz. It is also suitable to work in dynamic mode (also called tapping mode, amplitude modulation mode, and frequency modulation mode), where the cantilever is oscillated at a drive frequency close to its resonance frequency between several kHz to MHz, and where there is no continuous contact with the surface to scan. It can happen that the resonance frequency is much larger than the frequency bandwidth of the camera 10. In order to measure the oscillations of the cantilever, the intensity of the laser source 1 is modulated at a frequency close to the driving frequency of the cantilever. The beat frequency (which is given by the difference between the laser modulation frequency and the cantilever oscillation frequency) shall be within the frequency bandwidth of the camera 10 and the image processing means in order to acquire the deflection of the cantilever at a sufficient rate.

The setup and method can also be used to measure the deflection and / or the torsion of a cantilever immersed in a fluid (gaseous or liquid). It is also suitable for measuring the deflection and / or torsion of cantilever used for any other purpose, with or without tip, such as, for example, AFM or chemical noses applications. In case that the FMS is immerged in a fluid having a refractive index $n_{fluid} > 1$, then the wavelength $\lambda$ that has to be considered is the wavelength $\lambda_{fluid}$ according to the following relation:

$$\lambda_{fluid} = \frac{\lambda_{vacuum}}{n_{fluid}}$$

where $X_{vacuum}$ is the wavelength in vacuum of the laser source 1.

Of course, each improvement may be implemented separately or implemented in combination with one or several others.

The present invention discloses several methods for computing an absolute deflection $\Delta z_{x1}$ of a flexible micromechanical structure for a micromechanical measurement system at a position x1 of the movable area.

One method applied to the measurement device previously disclosed, comprises the following steps. The first step consists in taking a first interferogram picture at a fixed time to in order to perform an initialization with the image processing means. The initialization comprises a measurement determining an angle $\alpha_{x2}(t_0)$ formed by a set of fringes with the length of the flexible micromechanical structure at the position x2. The second step consists in taking a second interferogram picture at a variable time t. One measurement is performed in the picture with image processing means in order to determine an angle $\alpha_{x2}(t)$ formed by a set of fringes with the length of the flexible micromechanical structure at the same position x2. Subsequently, the angle shift $\Delta\alpha_{x2}$ can be computed according to the relation:

$$\Delta\alpha_{x2}(t) = \alpha_{x2}(t) - \alpha_{x2}(t_0)$$

The absolute deflection $\Delta z_{x1}$ at said position x1 is given by a transfer function $f_{x2}$:

$$\Delta z_{x1} = f_{x2}(\Delta\alpha_{x2})$$

Another method for computing an absolute deflection $\Delta z_{x1}$ comprises the steps of:

- taking a first interferogram picture at a fixed time to, and performing in the picture one initialization with the image processing means. It comprises a measurement to determine a lateral spatial phase $\varphi_c(t_0)$ of a set of fringes at a position C. This position C is chosen near the clamped area where the maximum absolute deflection is smaller than half the wavelength $\lambda$ of the laser source (1),
- taking a second interferogram picture at a variable time t, and performing in the picture one measurement with the image processing means. It determines a lateral spatial phase $\varphi_c(t)$ of a set of fringes at this position C.

The lateral spatial phase shift $\Delta\varphi_c$ at said position C is given by :

$$\Delta\varphi_C(t) = \varphi_C(t) - \varphi_C(t_0)$$

The absolute deflection $\Delta z_{x1}$ at the position x1 is given by a transfer function $g_c$:

$$\Delta z_{x1} = g_c(\Delta\varphi_C)$$

Another method for computing an absolute deflection $\Delta z_{x1}$ comprises the steps of:

- taking a first interferogram picture at a fixed time to, and performing in the picture one initialization with the image processing means. It comprises :

    o a first initialization measurement determining a lateral spatial phase $\varphi_{x2}(t_0)$ of a set of fringes at a position x2,
    o a second initialization measurement determining a first coarse measurement made at a position x3 along said length,

- taking a second interferogram picture at a variable time t, and performing in the picture:

o a first measurement with the image processing means in order to determine a lateral spatial phase $\varphi_{x2}(t)$ of a set of fringes at a position x2,
o a second measurement with the image processing means in order to determine a second coarse measurement made at a position x3.

The first initialization measurement and the first measurement determine an ambiguous deflection $\Delta h_{x1,amb}$ of the movable area at the position x1 according to a transfer function $g_{x2}$:

$$\Delta h_{x1,amb} = g_{x2}(\Delta\varphi_{x2,amb}) \text{ modulo } g_{x2}(2\pi),$$

where :

$\Delta\varphi_{x2,amb}(t)$ is the lateral spatial phase shift modulo $2\pi$ given by:

$$\Delta\varphi_{x2,amb}(t) = \varphi_{x2}(t) - \varphi_{x2}(t_0)$$

The first and the second coarse measurements determine an absolute deflection $\Delta z_{x1,coarse}$. The absolute deflection $\Delta z_{x1}$ is given by the equation:

$$\Delta z_{x1} = \Delta h_{x1,amb} + \text{integer}\left(\frac{\Delta z_{x1,coarse} - \Delta h_{x1,amb}}{g_{x2}(2\pi)} + \frac{1}{2}\right) \cdot g_{x2}(2\pi)$$

According to one embodiment of the previous method, the position x3 is chosen so that the maximum absolute deflection at this position shall always be smaller than half the wavelength $\lambda$ of the laser source (1). The first coarse and second coarse measurements determine successively a lateral spatial phase $\varphi_{x3}(t_0)$ and $\varphi_{x3}(t)$ of a set of fringes at the position x3. In this embodiment, the absolute deflection $\Delta z_{x1,coarse}$ is given by the equation:

$$\Delta z_{x1,coarse} = g_{x2}(\Delta\varphi_{x2}(t))$$

$\Delta\varphi_{x2}(t)$ is the spatial phase shift given by:

$$\Delta\varphi_{x2}(t) = K. \Delta\varphi_{x3}(t)$$

where $\Delta\varphi_{x3}(t)$ is the spatial phase shift given by:

$$\Delta\varphi_{x3}(t) = \varphi_{x3}(t) - \varphi_{x3}(t_0)$$

K is a proportionality constant computed from the following relation:

$$K = \frac{\Delta\varphi_{x2\_ref}}{\Delta\varphi_{x3\_ref}}$$

$\Delta\varphi_{x2\_ref}$ is a phase shift reference smaller than $2\pi$ at said position x2, $\Delta\varphi_{x3\_ref}$ is a phase shift reference smaller than $2\pi$ at said position x3 and

$\Delta\varphi_{x2\_ref}$ and $\Delta\varphi_{x3\_ref}$ correspond to a deflection $\Delta z_{x1\_ref}$.

According to another embodiment of the previous method, the first and second coarse measurements determine successively an angle $\alpha_{x3}(t_0)$ and $\alpha_{x3}(t)$ formed by a set of fringes with the length of the flexible micromechanical structure at the position x3. The absolute deflection $\Delta z_{x1,coarse}$ is given by a transfer function $f_{x3}$:

$$\Delta z_{x1,coarse} = f_{x3}(\Delta\alpha_{x3}),$$

where $\Delta\alpha_{x3}$ is the angle shift given by :

$$\Delta\alpha_{x3}(t) = \alpha_{x3}(t) - \alpha_{x3}(t_0)$$

The present invention further discloses a method for computing the torsion of a flexible micromechanical structure for a micromechanical measurement system as previously described. The torsion is measured at a position x of the movable area. This method requires that the image processing means are arranged to perform one initialization and one measurement in the interferogram picture. This method comprises the steps of:

- performing a initialization measurement determining, at a fixed time to, the lateral period $y_0$ of a set of fringes at a position x in the movable area of the flexible micromechanical structure 7c,
- performing a measurement determining, at a variable time t, the lateral period y of a set of fringes at the same position x.

The following relation is used:

$$y - y_0 = \lambda.\left(\frac{1}{\sin\theta} - \frac{1}{\sin\theta_0}\right)$$

$\theta$ is the angle between the projections of the reference and sample beams onto a plane normal to the length of the flexible micromechanical structure (i.e. y-z plane) after recombination in the beam splitter 3 when a force is applied. $\theta_0$ is the angle between the projections of the reference and sample beams onto a plane normal to the length of the flexible micromechanical structure (i.e. y-z plane) after recombination in the beam splitter 3 when no force is applied. $\lambda$ is the wavelength of the laser source 1.

The preceding description is provided as non-limiting examples and one skilled in the art will be able to implement some variations of embodiment without going outside the scope of the present invention.

**Claims**

1. A micromechanical measurement system comprising:

   - a laser source (1), for emitting a coherent light beam (2) having a wavelength $\lambda$,
   - an interferometer, comprising:
   - a beam splitter (3), receiving the light beam (2), and separating it into a reference beam (4) and a sample beam (6),

- a mirror (5), oriented about perpendicularly to the reference beam, and reflecting it in the direction of the beam splitter (3),

- at least one flexible micromechanical structure (7), having a reflective surface (7a), at least a clamped area (7b) and a movable area (7c), said reflective surface (7a) reflecting the sample beam (6) in the direction of the beam splitter (3),

- a camera (10), for acquiring a picture of an interferogram produced by a recombination, at the beam splitter (3) level, of the reflected reference and sample beams, the interferogram picture being composed of a plurality of fringes,

- at least one imaging lens (11), allowing the flexible micromechanical structure to be imaged on the camera (10), and

- image processing means,

**characterised in that** the fringes are about parallel to the length of the flexible micromechanical structure when no force is applied to the movable area (7c) and **in that** the image processing means are arranged in order to compute the absolute deflection $\Delta z_{x1}$ of the movable area at a position x1 along the length of the flexible micromechanical structure by performing:

- one initialization in a first interferogram picture taken at a fixed time to and
- at least one measurement in a second interferogram picture taken at a variable time t.

2. The micromechanical measurement system according to claim 1, **characterised in that** the reflective surface (7a) of the flexible micromechanical structure (7) is oriented about perpendicularly to the sample beam (6) when no force is applied to the movable area (7c) of the flexible micromechanical structure.

3. The micromechanical measurement system according to claim 1, **characterised in that** it furthermore comprises a prism (20) placed between the beam splitter (3) and the flexible micromechanical structure (7) and arranged to deviate the sample beam (6) and orient it perpendicularly to the reflective surface (7a) of the flexible micromechanical structure (7).

4. The micromechanical measurement system according to anyone of claims 1 to 3, **characterised in that** :

- said initialization determines an angle $\alpha_{x2}(t_0)$ formed by a set of fringes with the length of the flexible micromechanical structure at a position x2 along said length, and
- said measurement determines an angle $\alpha_{x2}(t)$ formed by a set of fringes with the length of the flexible micromechanical structure at said position x2
- said absolute deflection $\Delta z_{x1}$ is given by a transfer function $f_{x2}$:

$$\Delta z_{x1} = f_{x2}(\Delta\alpha_{x2}),$$

where $\Delta\alpha_{x2}$ is the angle shift at said position x2 given by :

$$\Delta\alpha_{x2}(t) = \alpha_{x2}(t) - \alpha_{x2}(t_0).$$

5. The micromechanical measurement system according to anyone of claims 1 to 3, **characterised in that**:

- said initialization determines a lateral spatial phase $\varphi_c(t_0)$ of a set of fringes at a position C near the clamped area where the maximum absolute deflection at said position C is smaller than half the wavelength $\lambda$ of the laser source (1), and
- said measurement determines a lateral spatial phase $\varphi_c(t)$ of a set of fringes at said position C,
- said absolute deflection $\Delta z_{x1}$ is given by a transfer function $g_c$:

$$\Delta z_{x1} = g_c(\Delta \varphi_C),$$

where $\Delta \varphi_c(t)$ is the lateral spatial phase shift given by:

$$\Delta \varphi_c(t) = \varphi_c(t) - \varphi_c(t_0).$$

6. The micromechanical measurement system according to anyone of claims 1 to 3, **characterised in that** the image processing means are furthermore arranged to compute an ambiguous deflection $\Delta h_{x1,amb}$ of the movable area at said position x1, and **in that**:

- said initialization determines a lateral spatial phase $\varphi_{x2}(t_0)$ of a set of fringes at a position x2 along said length, and
- said measurement determines a lateral spatial phase $\varphi_{x2}(t)$ of a set of fringes at said position x2,
- said ambiguous deflection $\Delta h_{x1,amb}$ at said position x1 is given by a transfer function $g_{x2}$:

$$\Delta h_{x1,amb} = g_{x2}(\Delta \varphi_{x2,amb}) \text{ modulo } g_{x2}(2\pi),$$

where :

$\Delta \varphi_{x2,amb}(t)$ is the lateral spatial phase shift modulo $2\pi$ given by:

$$\Delta \varphi_{x2,amb}(t) = \varphi_{x2}(t) - \varphi_{x2}(t_0),$$

7. The micromechanical measurement system according to claim 6, **characterised in that**:

- said initialization further comprises a first coarse measurement made at a position x3 along said length,
- a second coarse measurement is made in the second interferogram picture taken at the variable time t at said position x3,
- said first and second coarse measurements determine an absolute deflection $\Delta z_{x1,coarse}$ at said position x1, and
- said absolute deflection $\Delta z_{x1}$ is given by the equation:

$$\Delta z_{x1} = \Delta h_{x1,amb} + \text{integer}\left(\frac{\Delta z_{x1,coarse} - \Delta h_{x1,amb}}{g_{x2}(2\pi)} + \frac{1}{2}\right) \cdot g_{x2}(2\pi)$$

8. The micromechanical measurement system according to claim 7, **characterised in that**:

- said position x3 is chosen so that the maximum absolute deflection at said position x3 is smaller than half the wavelength $\lambda$ of the laser source (1),
- said first coarse measurement determines a lateral spatial phase $\varphi_{x3}(t_0)$ of a set of fringes at said position x3,
- said second coarse measurement determines a lateral spatial phase $\varphi_{x3}(t)$ of a set of fringes at said position x3, and
- said absolute deflection $\Delta z_{x1,coarse}$ at said position x1 is given by the equation:

$$\Delta z_{x1,coarse} = g_{x2}(K. \Delta\varphi_{x3}(t))$$

where:

$\Delta\varphi_{x3}(t)$ is the spatial phase shift given by :

$$\Delta\varphi_{x3}(t) = \varphi_{x3}(t) - \varphi_{x3}(t_0),$$

K is a proportionality constant computed from the following relation,

$$K = \frac{\Delta\varphi_{x2\_ref}}{\Delta\varphi_{x3\_ref}}$$

$\Delta\varphi_{x2\_ref}$ is a phase shift reference smaller than $2\pi$ at said position x2,
$\Delta\varphi_{x3\_ref}$ is a phase shift reference smaller than $2\pi$ at said position x3 and
$\Delta\varphi_{x2\_ref}$ and $\Delta\varphi_{x3\_ref}$ correspond to a deflection $\Delta z_{x1\_ref}$.

9. The micromechanical measurement system according to claim 7, **characterised in that**:

- said first coarse measurement determines an angle $\alpha_{x3}(t_0)$ formed by a set of fringes with the length of the flexible micromechanical structure at said position x3, and
- said second coarse measurement determines an angle $\alpha_{x3}(t)$ formed by a set of fringes with the length of the flexible micromechanical structure at said position x3,
- said absolute deflection $\Delta z_{x1,coarse}$ at said position x1 is given by a transfer function $f_{x3}$:

$$\Delta z_{x1,coarse} = f_{x3}(\Delta\alpha_{x3}),$$

where:

$\Delta\alpha_{x3}$ is the angle shift at said position x3 given by :

$$\Delta\alpha_{x3}(t) = \alpha_{x3}(t) - \alpha_{x3}(t_0)$$

10. The micromechanical measurement system according to anyone of claims 1 to 9, **characterised in that** the image processing means are furthermore arranged to analyze the torsion of the movable area at a position x along the length of the flexible micromechanical structure, using the following relation:

$$y - y_0 = \lambda.\left(\frac{1}{\sin\theta} - \frac{1}{\sin\theta_0}\right)$$

where :

y is the lateral period of the fringes in the movable area (7c) when a force is applied,

$y_0$ is the lateral period of the fringes in the movable area (7c) when no force is applied,

θ is the angle between the projections of the reference and sample beams onto a plane normal to the length of the flexible micromechanical structure after recombination in the beam splitter (3) when a force is applied,

$\theta_0$ is the angle between the projections of the reference and sample beams onto a plane normal to the length of the flexible micromechanical structure after recombination in the beam splitter (3) when no force is applied,

λ is the wavelength of the laser source (1).

**11.** The micromechanical measurement system according to anyone of claims 1 to 10, **characterised in that** it comprises a plurality of flexible micromechanical structures arranged in a 1D or 2D array, said sample beam (6) being projected on all flexible micromechanical structures, said camera (10) being arranged in order to acquire a picture of the interferogram patterns produced by all the flexible micromechanical structures, and said image processing means being arranged to compute the deflection of all the flexible micromechanical structures from the acquired picture.

**12.** The micromechanical measurement system according to anyone of claims 1 to 11, **characterised in that** the laser source (1) is powered by a DC power supply to which a white noise signal is superposed.

**13.** The micromechanical measurement system according to anyone of claims 1 to 12, **characterised in that** a shutter is arranged to blank out the reference beam (4) for a determined period of time.

**14.** Method for computing an absolute deflection $\Delta z_{x1}$ of a flexible micromechanical structure for a micromechanical measurement system as defined in claim 4, **characterised in that** it comprises the steps of:

- taking a first interferogram picture at a fixed time to, and performing in said picture:

o one initialization with image processing means comprising a measurement determining an angle $\alpha_{x2}(t_0)$ formed by a set of fringes with the length of the flexible micromechanical structure at a position x2, and

- taking a second interferogram picture at a variable time t, and performing in said picture:

o one measurement with image processing means determining an angle $\alpha_{x2}(t)$ formed by a set of fringes with the length of the flexible micromechanical structure at said position x2,

and **in that** the absolute deflection $\Delta z_{x1}$ at a position x1 of the movable area is given by a transfer function $f_{x2}$:

$$\Delta z_{x1} = f_{x2}(\Delta \alpha_{x2}),$$

where $\Delta \alpha_{x2}$ is the angle shift at said position x2 given by :

$$\Delta \alpha_{x2}(t) = \alpha_{x2}(t) - \alpha_{x2}(t_0).$$

**15.** Method for computing an absolute deflection $\Delta z_{x1}$ of a flexible micromechanical structure for a micromechanical measurement system as defined in claim 5, **characterised in that** it comprises the steps of:

- taking a first interferogram picture at a fixed time to, and performing in said picture:

o one initialization with image processing means comprising a measurement determining a lateral spatial phase $\varphi_c(t_0)$ of a set of fringes at a position C near the clamped area where the maximum absolute deflection at said position C is smaller than half the wavelength λ of the laser source (1),

- taking a second interferogram picture at a variable time t, and performing in said picture:

o one measurement with image processing means determining a lateral spatial phase $\varphi_c(t)$ of a set of fringes at said position C,

and **in that** the absolute deflection $\Delta z_{x1}$ at a position x1 of the movable area is given by a transfer function $g_c$:

$$\Delta z_{x1} = g_c(\Delta \varphi_C),$$

where $\Delta \varphi_c(t)$ is the lateral spatial phase shift at said position x2 given by :

$$\Delta \varphi_C(t) = \varphi_C(t) - \varphi_C(t_0)$$

16. Method for computing an absolute deflection $\Delta z_{x1}$ of a flexible micromechanical structure for a micromechanical measurement system as defined in claims 6 and 7, **characterised in that** it comprises the steps of:

    - taking a first interferogram picture at a fixed time to, and performing in said picture:

        o one initialization with image processing means comprising:

            ■ a first initialization measurement determining a lateral spatial phase $\varphi_{x2}(t_0)$ of a set of fringes at a position x2,
            ■ a second initialization measurement determining a first coarse measurement made at a position x3 along said length,

    - taking a second interferogram picture at a variable time t, and performing in said picture:

        o a first measurement with image processing means determining a lateral spatial phase $\varphi_{x2}(t)$ of a set of fringes at said position x2,
        o a second measurement with image processing means determining a second coarse measurement made at a position x3 along said length,

and **in that**:

    - said first initialization measurement and first measurement determine an ambiguous deflection $\Delta h_{x1,amb}$ of the movable area at said position x1 according to a transfer function $g_{x2}$:

$$\Delta h_{x1,amb} = g_{x2}(\Delta \varphi_{x2,amb}) \text{ modulo } g_{x2}(2\pi),$$

where :

$\Delta \varphi_{x2,amb}(t)$ is the lateral spatial phase shift modulo $2\pi$ given by:

$$\Delta \varphi_{x2,amb}(t) = \varphi_{x2}(t) - \varphi_{x2}(t_0),$$

    - said first and second coarse measurements determine an absolute deflection $\Delta z_{x1,coarse}$ at said position x1, and
    - said absolute deflection $\Delta z_{x1}$ at a position x1 of the movable area is given by the equation:

$$\Delta z_{x1} = \Delta h_{x1,amb} + \text{integer} \left( \frac{\Delta z_{x1,coarse} - \Delta h_{x1,amb}}{g_{x2}(2\pi)} + \frac{1}{2} \right) \cdot g_{x2}(2\pi)$$

17. Method for computing an absolute deflection $\Delta z_{x1}$ according to claim 16, **characterised in that**:

- said position x3 is chosen so that the maximum absolute deflection at said position x3 is smaller than half the wavelength $\lambda$ of the laser source (1),
- said first coarse measurement determines a lateral spatial phase $\varphi_{x3}(t_0)$ of a set of fringes at said position x3,
- said second coarse measurement determines a lateral spatial phase $\varphi_{x3}(t)$ of a set of fringes at said position x3,
- said absolute deflection $\Delta z_{x1,coarse}$ at said position x1 is given by the equation:

$$\Delta z_{x1,coarse} = g_{x2}(K. \Delta\varphi_{x3}(t))$$

where:

$\Delta\varphi_{x3}(t)$ is the spatial phase shift given by :

$$\Delta\varphi_{x3}(t) = \varphi_{x3}(t) - \varphi_{x3}(t_0),$$

K is a proportionality constant computed from the following relation,

$$K = \frac{\Delta\varphi_{x2\_ref}}{\Delta\varphi_{x3\_ref}}$$

$\Delta\varphi_{x2\_ref}$ is a phase shift reference smaller than $2\pi$ at said position x2, $\Delta\varphi_{x3\_ref}$ is a phase shift reference smaller than $2\pi$ at said position x3 and $\Delta\varphi_{x2\_ref}$ and $\Delta\varphi_{x3\_ref}$ correspond to a deflection $\Delta z_{x1\_ref}$.

**18.** Method for computing an absolute deflection $\Delta z_{x1}$ according to claim 16, **characterised in that**:

- said first coarse measurement determines an angle $\alpha_{x3}(t_0)$ formed by a set of fringes with the length of the flexible micromechanical structure at said position x3, and
- said second coarse measurement determines an angle $\alpha_{x3}(t)$ formed by a set of fringes with the length of the flexible micromechanical structure at said position x3,
- said absolute deflection $\Delta z_{x1,coarse}$ at said position x1 is given by a transfer function $f_{x3}$:

$$\Delta z_{x1,coarse} = f_{x3}(\Delta\alpha_{x3}),$$

where:

$\Delta\alpha_{x3}$ is the angle shift at said position x3 given by:

$$\Delta\alpha_{x3}(t) = \alpha_{x3}(t) - \alpha_{x3}(t_0)$$

**19.** Method for computing a torsion of a movable area in a flexible micromechanical structure for a micromechanical measurement system as defined in claim 10, at a position x of the movable area, **characterised in that** it comprises the steps of:

- taking a first interferogram picture at a fixed time to, and performing in said picture:

    o one initialization with image processing means comprising a measurement determining a lateral period $y_0$ of a set of fringes at a position x in the movable area of the flexible micromechanical structure (7c),

- taking a second interferogram picture at a fixed time t, and performing in said picture:

o one measurement with image processing means determining a lateral period y of a set of fringes at a position x in the movable area of the flexible micromechanical structure (7c),

and **in that** the torsion is given by the relation:

$$y - y_0 = \lambda . \left( \frac{1}{\sin \theta} - \frac{1}{\sin \theta_0} \right)$$

where :

$\theta$ is the angle between the projections of the reference and sample beams onto a plane normal to the length of the flexible micromechanical structure after recombination in the beam splitter (3) when a force is applied,
$\theta_0$ is the angle between the projections of the reference and sample beams onto a plane normal to the length of the flexible micromechanical structure after recombination in the beam splitter (3) when no force is applied,
$\lambda$ is the wavelength of the laser source (1).

Figure 1

Figure 2

Figure 3a

Figure 3b

Figure 3c

Figure 4a

Figure 4d

Figure 4b

Figure 4e

Figure 4c

Figure 4f

Figure 5a

Figure 5d

Figure 5b

Figure 5e

Figure 5c

Figure 5f

Europäisches
Patentamt

European
Patent Office

Office européen
des brevets

# EUROPEAN SEARCH REPORT

Application Number

EP 09 18 0213

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HIROTAKA KOYAMA ET AL: "Multiprobe SPM System Using Optical Interference Patterns" IEEE JOURNAL OF SELECTED TOPICS IN QUANTUM ELECTRONICS, IEEE SERVICE CENTER, PISCATAWAY, NJ, US, vol. 13, no. 2, 1 March 2007 (2007-03-01), pages 415-422, XP011179423 ISSN: 1077-260X * figures 2-5,8-12 * * paragraph [II.A] - paragraph [II.B] * * paragraph - paragraph [IV.B] * ----- | 1-19 | INV. G01Q20/02 G01B9/02 |
| A | US 2009/168073 A1 (TAI HUNG-MING [TW] ET AL) 2 July 2009 (2009-07-02) * figures 2-11 * * paragraph [0025] - paragraph [0041] * ----- | 1-19 | |
| A,D | EP 0 422 548 A2 (OLYMPUS OPTICAL CO [JP]) 17 April 1991 (1991-04-17) * column 4, line 17 - column 8, line 17; figures 1,2 * ----- | 1-19 | |
| | | | TECHNICAL FIELDS SEARCHED (IPC) G01Q G01B |

The present search report has been drawn up for all claims

| Place of search | Date of completion of the search | Examiner |
|---|---|---|
| Berlin | 22 March 2010 | Polesello, Paolo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 09 18 0213

This annex lists the patent family members relating to the patent documents cited in the above-mentioned European search report.
The members are as contained in the European Patent Office EDP file on
The European Patent Office is in no way liable for these particulars which are merely given for the purpose of information.

22-03-2010

| Patent document cited in search report | Publication date | Patent family member(s) | Publication date |
|---|---|---|---|
| US 2009168073 A1 | 02-07-2009 | NONE | |
| EP 0422548 A2 | 17-04-1991 | DE 69019913 D1<br>DE 69019913 T2<br>US 5206702 A | 13-07-1995<br>07-12-1995<br>27-04-1993 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3123805 B

**Non-patent literature cited in the description**

- **G. MEYER et al.** *Appl. Phys. Lett.,* 1988, vol. 53, 1045
- **M. YUE et al.** *J. Microelectromech. Syst.,* 2004, vol. 13, 290
- **H. KOYAMA et al.** Multi-Probe SPM using Fringe Patterns for a parallel Nano Imaging. *IEEE/LEOS International Conference on Optical MEMs and Their Applications,* 2006, 172